**Europäisches Patentamt**

**European Patent Office**

**Office européen des brevets**

(19)

(11) Numéro de publication : **0 127 544**
**B1**

(12)

# FASCICULE DE BREVET EUROPÉEN

(45) Date de publication du fascicule du brevet :
17.05.89

(51) Int. Cl.⁴ : **H 04 B 3/23**

(21) Numéro de dépôt : 84401082.7

(22) Date de dépôt : 25.05.84

(54) Annuleur d'écho à filtre numérique adaptatif pour système de transmission.

(30) Priorité : 26.05.83 FR 8308713

(43) Date de publication de la demande :
05.12.84 Bulletin 84/49

(45) Mention de la délivrance du brevet :
17.05.89 Bulletin 89/20

(84) Etats contractants désignés :
AT BE CH DE FR GB IT LI LU NL SE

(56) Documents cités :
EP—A— 0 036 696
EP—A— 0 073 869
GB—A— 2 029 175
IEEE TRANSACTIONS ON COMMUNICATIONS, vol. COM-25, no. 7, juillet 1977, New York (US) S.B. WEINSTEIN:"A passband data-driven echo canceller for full-duplex transmission on two-wire circuits", pages 654-666
NATIONAL TELECOMMUNICATIONS CONFERENCE, 29 novembre - 3 décembre 1981, New Orleans, Louisiana, vol. 2, NTC Record-1981, IEEE, New York (US) E. JORGENSEN:"Echo cancelling system based on the sign correlation algorithm", pages C7.5.1 - C7.5.6

(73) Titulaire : **CENTRE NATIONAL DE LA RECHERCHE SCIENTIFIQUE (CNRS)**
**15, Quai Anatole France**
**F-75700 Paris Cedex 07 (FR)**

(72) Inventeur : **Bonnet, Madeleine**
**43, rue de Lyon**
**F-75012 Paris (FR)**
Inventeur : **Macchi, Odile**
**4, rue du Général Duchesne**
**F-91400 Orsay (FR)**

(74) Mandataire : **Fort, Jacques et al**
**CABINET PLASSERAUD 84, rue d'Amsterdam**
**F-75009 Paris (FR)**

Jouve, 18, rue St-Denis, 75001 Paris, France

## Description

Arrière plan de l'invention

L'invention concerne le domaine de la transmission de données bidirectionnelle simultanée, en particulier par modulation MAQ ou de phase, sur un support unique. Elle a plus particulièrement pour objet un annuleur d'écho pour un tel système, du type comprenant un filtre numérique adaptatif destiné à fournir l'estimation $\sigma_k$ de l'écho effectif, annuleur dont l'algorithme d'adaptation du vecteur C des coefficients est de la forme :

$$\vec{C}_{k+1} = \vec{C}_k + \mu \vec{a}_k^* \cdot f(e_k)$$

où $\mu$ et f sont un pas d'incrémentation et une fonction prédéterminés.

Avant d'exposer l'état antérieur de la technique et l'apport de l'invention, il peut être utile de rappeler quelques données concernant la transmission bidirectionnelle de données sur support unique et les problèmes qu'elle pose.

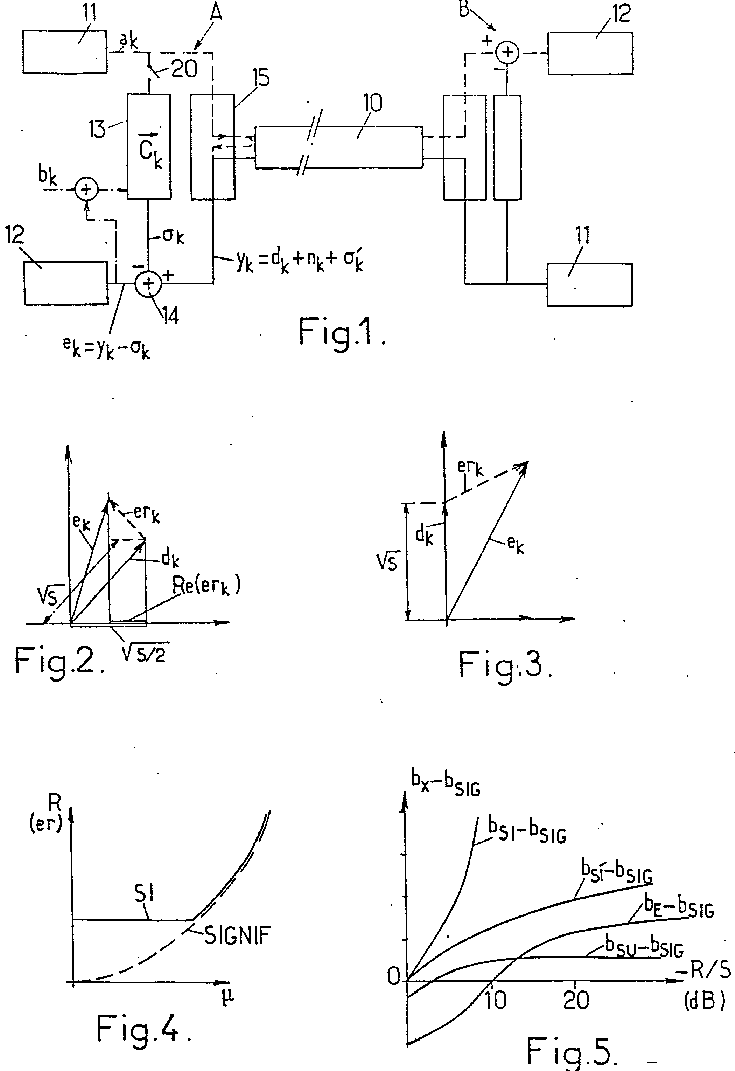

La Figure 1 montre le schéma de principe d'un système de transmission bidirectionnelle simultanée entre deux stations éloignées A et B par l'intermédiaire d'un support de transmission unique 10 qui est par exemple un circuit téléphonique deux fils. Les informations à transmettre sont constituées par une séquence de symboles généralement quantifiés, qui peuvent être représentatifs de signaux de données aussi bien que de signaux de parole. Lorsque les signaux utiles a et d en provenance des stations A et B sont émis dans la même bande de fréquences, le signal y reçu par le récepteur 12 à la station A comprend le signal utile d (données lointaines) émis par l'émetteur 11 de la station éloignée B, mais noyé dans un bruit additif :

$$y = d + n + \sigma' \tag{1}$$

Le bruit, souvent beaucoup plus puissant que le signal utile d, comprend un bruit de ligne additif n et un écho $\sigma'$ du signal a (données locales) émis par l'émetteur 11 à la station A, et ce malgré la présence de transformateurs différentiels 15 aux deux extrémités du support de transmission 10. Ce phénomène est schématisé sur la Figure 1 où la transmission de A vers B est indiquée en trait plein tandis que la transmission de A vers B est indiquée en tirets. Le terme prépondérant de ce bruit est en général l'écho $\sigma'$, qui se déduit des données locales a par un « filtre d'écho » $C_0$ inconnu :

$$\sigma_k' = \vec{C}_0 \cdot \vec{a}_k$$

Il est nécessaire de supprimer, ou du moins d'atténuer, l'effet de l'écho qui empêcherait la restitution du signal d par le récepteur 12 de la station A. On a déjà proposé de nombreuses techniques d'annulation d'écho. La solution la plus fréquemment utilisée consiste à incorporer à chaque station un filtre numérique adaptatif 13, dit « annuleur d'écho », dont la fonction de transfert peut être représentée par un vecteur de coefficients $\vec{C}_k$ qui, à partir d'une séquence de symboles successifs $a_k$ (k indiquant le numéro d'ordre du symbole) émis par la source 11 de la station A, séquence qui est évidemment disponible à la station A, fournit une estimation linéaire

$$\sigma_k = \vec{C}_k \cdot \vec{a}_k \tag{2}$$

Cette estimation $\sigma$ est dite écho reconstitué ou estimation de l'écho vrai $\sigma'$. Cet écho reconstitué est appliqué à un soustracteur 14 qui reçoit également le signal y arrivant par la ligne 10 à la station A. La différence $e_k$ entre les signaux :

$$e_k = y_k - \sigma_k \tag{3}$$

est appliquée au récepteur 12.

La puissance de l'écho $\sigma_k'$ est très variable, ainsi que celle du signal utile $d_k$.

Les données utilisées sont en général complexes (cas de la modulation de phase et de la modulation de deux porteuses en quadrature). Dans ce cas, l'algorithme d'adaptation utilisé est en général de la forme :

$$\vec{C}_{k+1} = \vec{C}_k + \mu \cdot \vec{a}_k^* \cdot f(e_k) \tag{4}$$

où μ et f sont un pas d'incrémentation et une fonction prédéterminés. Cette formule prend, comme représentation de l'écho résiduel $er_k$, le signal « propre »

$$e_k = er_k + d_k + n_k$$

où

$$er_k = (\vec{C}_0 - \vec{C}_k)\,\vec{a}_k.$$

La plupart du temps, lorsque l'écho ne présente pas de déphasage appréciable, on utilise comme fonction f le gradient de l'erreur quadratique, de sorte que l'algorithme (4) devient :

$$\vec{C}_{k+1} = \vec{C}_k + \mu(y_k - \sigma_k)\,\vec{a}_k^* \tag{5}$$

Cette solution a l'inconvénient de conduire à un filtre complexe, ayant un grand nombre d'éléments binaires ou « bits » par coefficient, typiquement une vingtaine, et à des calculs importants.

On a en conséquence envisagé d'utiliser le signe de $e_k = y_k - \sigma_k$ comme fonction, au lieu du gradient lui-même, pour simplifier la mise en œuvre. Mais on constate que cet algorithme ne peut assurer la convergence complète de l'adaptation.

Cet algorithme SI s'écrit en effet :

$$\vec{C}_{k+1} = \vec{C}_k + \mu \cdot \vec{a}_k^* \cdot \text{signe } e_k \tag{6}$$

où

$$\text{signe } (e_k) \triangleq 1/\sqrt{2}\,[\text{signe } e_k^r + i \text{ signe } e_k^i] \tag{7}$$

$e_k^r$ et $e_k^i$ étant respectivement les parties réelle et imaginaire de $e_k$.

Pour qu'il y ait convergence, il faut que $e_k$ ait le même signe que l'écho résiduel $er_k$. Or, dès que l'adaptation est suffisante pour que le niveau de $er_k$ soit inférieur au niveau des données lointaines $d_k$, la condition d'identité des signes n'est plus satisfaite et la convergence du résidu d'écho s'arrête (T.A.C.M. CLAASEN, W.F.G. MECKLENBRAÜKER, « Comparison of the convergence of two algorithms for adaptative FIR digital filters », IEEE Trans. ASSP, Vol. 29, No. 3, June 1981, pp. 670-678).

Cette difficulté apparaît sur la Figure 2 où a été représenté un cas où les parties réelles de l'écho résiduel $er_k$ et de l'écart $e_k$ entre écho reconstitué $\sigma_k$ et signal reçu $d_k$ ont des signes opposés.

D'autres solutions ont été utilisées pour résoudre ce problème. On a notamment proposé d'introduire un bruit forcé $b_k$, de niveau connu et voisin de celui des données lointaines $d_k$ pour compenser la présence de ces données (fig. 1). Mais cette addition augmente notablement la complexité du système (N. HOLTE, S. STUEFLOTTEN, « A new digital echo canceler for two-wire subscriber lines », IEEE Trans. on Communications, Vol. COM-29, No. 11, Nov. 1981, pp. 1573-1581).

On connaît (EP-A-0 036 696) un annuleur d'écho destiné à être utilisé dans une installation de transmission où l'écho présente une phase variable, par exemple parce que le support de transmission introduit une gigue de phase. Pour cela, le document enseigne d'utiliser un algorithme d'apprentissage qui reste valide aussi longtemps que la puissance de l'écho dépasse celle des données lointaines ; ce n'est plus le cas en régime permanent. Ce document n'envisage pas de tenir compte de l'angle théorique des données transmises avec les axes dans le cas d'une modulation QAM ou de phase où les données ne peuvent prendre à l'émission qu'un nombre prédéterminé de phases.

## Résumé de l'invention

La présente invention vise à fournir un annuleur d'écho qui présente des performances supérieures à celles des algorithmes existants et notamment supérieures aux performances de l'algorithme classique du gradient. Pour cela, elle utilise une approche complètement différente et part de la constatation que, lorsque les données lointaines $d_k$ sont sur l'un des axes (sur l'axe imaginaire dans le cas de la Fig. 3), la composante du signal « propre » $e_k$ orthogonale à la donnée $d_k$ (sur l'axe réel sur la Fig. 3) est égale à la composante correspondante de l'écho résiduel $er_k$ : en n'utilisant que cette composante orthogonale significative de l'écho résiduel $er_k$, la convergence pourra être améliorée. Et, en conséquence, l'invention propose — lorsque les données ne sont pas sur les axes — de réaliser l'adaptation de l'algorithme à l'aide de la seule composante du signal « propre » qui est orthogonale à la donnée lointaine $d_k$ : on peut parler d'utilisation du principe de projection.

L'invention propose en conséquence un annuleur d'écho conforme à la revendication 1 et un annuleur d'écho conforme à la revendication 2.

L'invention sera mieux comprise à la lecture de la description qui suit d'un mode particulier d'exécution de celle-ci, donné à titre d'exemple non limitatif. La description se réfère aux dessins qui l'accompagnent.

# EP 0 127 544 B1

### Description sommaire des dessins

La figure 1, déjà mentionnée, est un schéma de principe d'un système de transmission de données suivant l'art antérieur, dont les sections terminales sont équipées d'un annuleur d'écho.

Les figures 2 et 3 sont des diagrammes géométriques d'interprétation, montrant l'écho résiduel er, dans le cas d'une donnée complexe quelconque (fig. 2) et dans celui d'une donnée purement imaginaire (fig. 3).

La figure 4 est un diagramme montrant la réduction du bruit dans le cas de l'utilisation de l'algorithme du signe (courbe SI en trait plein) et dans le cas de l'un des algorithmes suivant l'invention (courbe en tirets) en fonction du pas d'incrémentation $\mu$.

La figure 5 est un diagramme donnant les courbes représentatives de la différence entre la longueur binaire des coefficients dans le cas d'un algorithme E, SI, SI' et SURAX et celle des coefficients de l'algorithme SIGNIF pour S/B = 20 dB, en fonction de — R/S.

La figure 6 montre la constitution de l'algorithme général fonctionnant avec la boucle d'adaptation de la phase $\theta_k$, la boucle permettant de déterminer $\xi_k$ et l'adaptation des coefficients de l'annuleur.

La figure 7 est un diagramme montrant la façon dont s'effectue le choix de $\xi_k + \theta_k$.

La figure 8 est un diagramme montrant le sens dans lequel la boucle de compensation de phase doit faire tourner $\bar{e}_k$ pour le ramener sur l'un des axes.

La figure 9 indique l'algorithme d'adaptation de phase $\theta_k$ dans le cas général.

Les figures 10A et 10B représentent 2 schémas équivalents du mode de détermination de la phase numérique $\xi_k$ dans le cas d'un diagramme MAQ 16 points.

La figure 11 indique l'adaptation des coefficients de l'annuleur d'écho suivant l'un des modes de fonctionnement de l'invention.

La figure 12, similaire à une fraction de la figure 1, montre la constitution de principe de la boucle de compensation de phase d'un annuleur d'écho suivant l'invention, dans le cas d'un diagramme comportant des données sur les diagonales.

Les figures 13A et 13B sont des diagrammes respectivement à quatre et seize points présentant des points sur les diagonales, c'est-à-dire pour lesquels $\xi_k$ est égal à $\pi/4$.

La figure 14 est un schéma détaillant la boucle d'adaptation de phase suivant un mode particulier correspondant à la figure 12.

### Description détaillée de modes de réalisation

Pour permettre une comparaison entre l'invention et l'art antérieur, on rappellera tout d'abord la structure et le fonctionnement d'un annuleur d'écho connu utilisant l'algorithme du gradient (5).

Le signal provenant de l'émetteur 11 de la station A est échantillonné par un composant 20 représenté par un interrupteur fermé à intervalles $\Delta$. L'annuleur 13 comporte un filtre qui utilise N échantillons successifs pour fournir une évaluation de l'écho à partir de K + L + 1 éléments de retard :

$$a_{k+k} = a[(k+K)\Delta]$$
$$\cdots\cdots$$
$$a_k = a[k\Delta]$$
$$\cdots\cdots$$
$$a_{k-L} = a[(k-L)\Delta]$$

Les N échantillons sont combinés pour fournir un vecteur $\overrightarrow{a_k}$ qui représente le signal du filtre numérique à l'instant $k\Delta$, juste après fourniture de $a_k$ par l'émetteur 11. L'écho estimé $\sigma_k$ est évalué à partir des échantillons $k-L$ à $k+K$ par des coefficients $h_{-K}$ à $h_L$, puis en faisant la somme des produits. Le vecteur $C_K$ des N coefficients est élaboré par l'algorithme d'adaptation (5).

Dans l'exposé de l'invention, on considérera d'abord le cas où les données sont sur l'un des axes, puis le cas où elles occupent une position quelconque.

### Cas de données sur un axe

La notation utilisée sera la suivante :

$$\Delta C_k = a_k^* e_k$$
$$\Delta C_k^r = \text{Re}\,(\Delta C_k), \quad \Delta C_k^i = \text{Im}\,(\Delta C_k) \tag{8}$$

A = puissance des données proches $a_k$
S = puissance des données lointaines $d_k$
R = puissance de l'écho résiduel $er_k$

Pour simplifier, on supposera négligeable la puissance du bruit de ligne $n_k$, hypothèse souvent réalisée et qui, de toute façon, ne modifie pas les résultats.

4

Par ailleurs, on supposera que les suites $\{a_k\}$ et $\{d_k\}$ représentent des variables aléatoires centrées, indépendantes, prenant des valeurs discrètes avec des probabilités égales.

Avec les notations précédentes, on peut écrire le signal propre $e_k$ au temps k :

$$e_k = (er_k^r + d_k^r) + i(er_k^i + d_k^i)$$

Si les données lointaines sont sur un axe (fig. 3), c'est-à-dire sont réelles ou imaginaires pures, l'une de leurs composantes est nulle. Si par exemple $d_k$ est imaginaire c'est-à-dire que $d_k^r = 0$, la partie réelle de $e_k$ est égale à la partie réelle du résidu d'écho $er_k$, au bruit de ligne près, et l'incrément de l'algorithme du gradient (5) devient, à partir de la formule (8)

$$\begin{cases} \Delta C_k^r = a_k^r e_k^r + a_k^i e_k^i \\ \Delta C_k^i = a_k^r e_k^i - a_k^i e_k^r \end{cases} \tag{9}$$

ou encore, puisque $d_k^r = 0$ :

$$\begin{cases} \Delta C_k^r = a_k^r er_k^r + a_k^i(er_k^i + d_k^i) \\ \Delta C_k^i = a_k^r(er_k^i + d_k^i) - a_k^i er_k^i \end{cases}$$

On a une formule similaire lorsque $d_k$ est réelle.

Dans la comparaison qui sera donnée plus loin, on appellera ONAX l'algorithme (9) du gradient lorsque les données lointaines sont sur l'un des axes.

Cet algorithme ONAX peut être transformé, suivant le principe de projection, en un algorithme simplifié SIGNID en n'utilisant que l'information significative contenue dans $(e_k)$ : il suffit pour cela d'enlever, dans les formules (8) et (9), la partie de l'incrément affectée de $d_k$, qui apparaît comme un bruit. On obtient ainsi, dans le cas où $d_k^r = 0$, les formules (9bis) où n'apparaissent plus les données lointaines.

$$\begin{cases} \Delta C_k^r = a_k^r er_k^r \\ \Delta C_k^i = - a_k^i er_k^r \end{cases} \tag{9bis}$$

Sous forme complexe, ces formules exprimant l'algorithme SIGNID peuvent s'écrire :

$$\text{SIGNID} \quad \vec{C}_{k+1} = \vec{C}_k + \mu \vec{a}_k^* \begin{cases} i\, e_k^i, & \text{si} \quad d_k^i = 0 \\ e_k^r, & \text{si} \quad d_k^r = 0 \end{cases}$$

L'un des buts recherchés est de réduire la complexité des algorithmes ; cette simplification peut être obtenue en ne prenant en compte que le signe de la composante significative utilisée. Les algorithmes ONAX et SIGNID donnent alors respectivement naissance à des algorithmes qu'on désignera par SURAX et SIGNIF : on va montrer que ces deux derniers algorithmes utilisant la fonction « signe » pallient les inconvénients déjà mentionnés des algorithmes du signe SI — donné par la formule (6) — et SI', — correspondant à l'adjonction d'un bruit forcé.

### Cas de données pouvant être hors des axes

Si la donnée lointaine $d_k$ ne présente pas la caractéristique d'être sur un axe, elle est, conformément à l'invention, ramenée sur un axe par une rotation $\varphi_k$ (de façon à rester dans un repère fixe). On obtient alors

$$\tilde{d}_k = d_k\, e^{i\varphi_k}$$

où $\tilde{d}_k$ a l'une de ses composantes (réelle ou imaginaire) nulle.

Cette rotation transforme l'incrément de l'algorithme du gradient en

$$\widehat{\Delta C}_k \triangleq \Delta C_k \exp(i\varphi_k) = a_k^*\, \tilde{e}_k$$

avec

$$\tilde{e}_k = e_k \exp(i\varphi_k) = \tilde{e}r_k + \tilde{n}_k + \tilde{d}_k$$

$\tilde{e}r_k$ et $\tilde{n}_k$ étant respectivement le résultat par la rotation $\varphi_k$ de $er_k$ et $n_k$.

Si par exemple, la donnée $d_k$ a été amenée sur l'axe imaginaire $\overline{Oy}$ par rotation, de sorte que $\tilde{d}_k^r = 0$, on obtient alors la formule :

$$\tilde{e}_k = (\tilde{e}r_k^r + i\tilde{e}r_k^i) + i\tilde{d}_k^i + (\tilde{n}_k^r + i\tilde{n}_k^i)$$

L'application du principe de projection donne alors l'incrément

$$\Delta'(C_k \exp i\varphi) = a_k^r(\tilde{e}r_k^r + \tilde{n}_k^r) - ia_k^i(\tilde{e}r_k^r + \tilde{n}_k^r)$$

Avec une donnée $\vec{a}_h$ tournée sur l'axe $\overrightarrow{Ox}$, c'est-à-dire telle que $\vec{a}_k^i = 0$, on obtiendrait

$$\Delta'(C_k \exp i\varphi) = a_k^* \tilde{e}_k^i$$
$$= a_k^i(\tilde{e}r_k^i + \tilde{n}_k^i) + ia_k^r(\tilde{e}r_k^i + \tilde{n}_k^i)$$

L'algorithme obtenu s'écrit alors

$$C_{k+1} \exp(i\varphi_k) = C_k \exp(i\varphi_k) + \mu a_k^* \begin{cases} (\tilde{e}_k)^r & \text{si} & \tilde{d}_k^r = 0 \\ i(e_k)^i & \text{si} & \tilde{d}_k^i = 0 \end{cases} \quad \text{GEN}$$

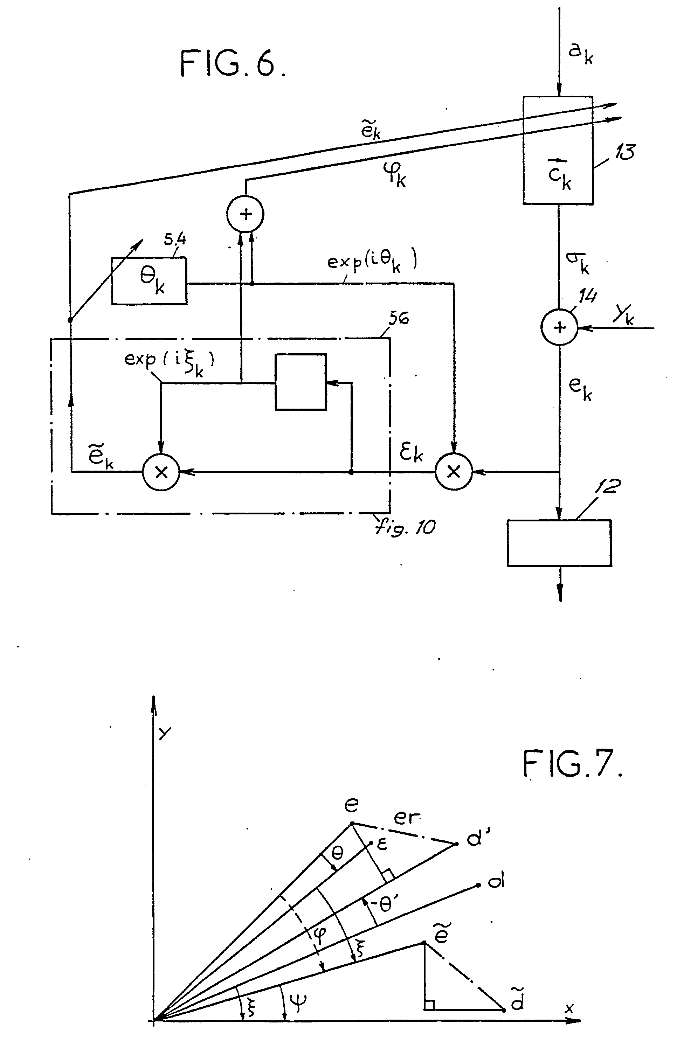

La façon dont les données peuvent être amenées sur l'un des axes sera décrite plus loin en faisant référence à la figure 7.

Le calcul permet de comparer les performances des différents algorithmes et notamment la puissance de l'écho résiduel R. Cette comparaison a été faite entre les résidus $R_E$ ; $R_{SI}$ ; $R_{SI}$ ; $R_{ON}$ ; $R_{SD}$ ; $R_{GEN}$ ; $R_{SU}$ ; $R_{SIG}$ dans le cas des algorithmes :

E = gradient, suivant la formule (5)
SI = signe, suivant la formule (6)
SI' = signe, avec introduction d'un bruit forcé
ONAX = gradient, avec données sur un des axes suivant la formule (9 bis)
SIGNID = ONAX en ne tenant compte que de la composante significative
GEN = données préalablement amenées sur un des axes, puis utilisation de la composante significative
SURAX = signe SI, dans le cas particulier où les données sont sur un des axes
SIGNIF = SURAX, en ne tenant compte que de la composante significative.

Dans le cas représentatif d'un résidu gaussien, et d'absence de bruit de ligne, les résidus sont donnés par le tableau :

Tableau I

| Algorithmes | Résidu gaussien | |
|---|---|---|
| (E) et (ONAX) | $R_E = \mu \dfrac{N \Lambda S}{2}$ | (10) |
| (SI) | $R_{SI} = \mu^2 \dfrac{\pi}{8} N^2 A^2 e^{S/R_S}$ | (11) |
| (SI') | $R_{SI'} = \mu \dfrac{\sqrt{\pi}}{2\sqrt{2}} N A \sqrt{s} e^{1/2}$ | (12) |
| (SURAX) | $R_{SU} = \mu^2 \dfrac{\pi}{2} \dfrac{N^2 A^2}{[1+e^{-S/2R_{SU}}]^2}$ | (13) |
| (SIGNIF) | $R_{SIG} = \mu^2 \dfrac{\pi}{8} N^2 A^2$ | (14) |

On constate de plus que les algorithmes SIGNID et GEN ont un résidu limite nul. En effet, pour ces 2 algorithmes, la valeur du résidu en présence de bruit de ligne est :

$$R \text{ SIGNID} = R_{GEN} = \mu NA \, B / (2 - \mu Na)$$

La puissance des données lointaines n'intervient pas. Ce résultat est très avantageux. Il subsiste pour tous les algorithmes utilisant le principe de projection : l'adaptation est réalisée à l'aide de la composante du signal « propre » qui est orthogonale à la donnée lointaine, et d'elle seule.

Dans les comparaisons qui suivent, seules les formes simplifiées SURAX et SIGNIF ont été prises en compte pour simplifier et non ONAX, SIGNID et GEN.

Le tableau 1 montre que les algorithmes SURAX et SIGNIF ont des performances meilleures que l'algorithme classique du signe SI et que $R_{SIG}$ ne dépend pas de la puissance S des données lointaines. Enfin, quels que soient R et $\mu$, $R_{SIG}$ est inférieur à $R_{SU}$. Pour S/R<2, ce qui correspond à des performances raisonnables, le gain de SIGNIF par rapport à SURAX est compris entre 3 et 6 dB.

L'avantage de SIGNIF par rapport à S est beaucoup plus important. Lorsque le résidu est gaussien, le rapport $R_S/R_{SIG}$ vaut $\exp(S/R_{SI})$ en l'absence de bruit. Ce rapport est voisin de 7 pour la valeur considérée précédemment, S/R = 2, et il croît rapidement avec S/R, c'est-à-dire lorsque l'annulation d'écho s'améliore.

Il apparaît, d'après les équations (10) et (13) que le paramètre $\mu_k$ utilisé dans SIGNIF n'est pas aussi petit que celui nécessaire à l'algorithme SI. En fait, $\mu$ est multiplié par le facteur $\exp(S/2R)$ en utilisant SIGNIF tout en obtenant le même niveau de résidu d'écho.

Comme cela a déjà été indiqué, l'un des avantages de SIGNIF est de ne pas dépendre de la puissance S des données lointaines, de sorte qu'il n'y a plus de saturation de R au niveau de S. Cet avantage apparaît encore plus clairement lorsqu'on considère non plus les résidus gaussiens, mais les résidus d'écho binaires. Pour SI, le résidu $R_{SI}$ décroît en $\mu^2$ lorsque R > S, mais cette décroissance s'arrête pour R = S, comme cela est indiqué en Figure 4. Au contraire, pour SIGNIF, la décroissance se poursuit en $\mu^2$ et un bruit forcé n'est pas nécessaire. Si on se souvient que, pour l'algorithme (E), la décroissance est en $\mu$, on constate un avantage important de SIGNIF par rapport à E, une valeur élevée de $\mu$ accélérant la convergence.

De plus, une comparaison des formules (10) et (14) fait apparaître que, pour $S > \mu NA\pi/4$, ce qui est une hypothèse toujours vérifiée dans la pratique, on a $R_E \geqslant R_{SIG}$ : en d'autres termes, l'algorithme SIGNIF est plus performant que E lorsque $\mu$ est petit, c'est-à-dire à la valeur obligatoirement adoptée en fin de convergence, alors que R/S est petit.

De plus, lorsqu'on évalue la complexité du calcul par les algorithmes E et SIGNIF en précision finie, comme on va le faire maintenant, on constate que l'inconvénient d'avoir $\mu_{SIG} < \mu_E$ pour des valeurs élevées de — R/S n'est qu'apparent car les longueurs de mot requises pour les coefficients de l'annuleur sont inférieures pour l'algorithme SIGNIF.

Le nombre minimum b de bits nécessaire à la représentation d'une composante du filtre de l'annuleur d'écho 13 dépend du résidu d'écho recherché R et de l'algorithme utilisé. Le calcul montre que le plus petit b assurant la convergence satisfait à la condition

$$\begin{cases} 2^{-b} = \mu \, \sqrt{\dfrac{A}{2}} & \text{pour} \quad \text{SURAX et si} \\[2ex] 2^{-b} = \mu \, \dfrac{\sqrt{A}}{2} & \text{pour} \quad \text{SIGNIF} \\[2ex] 2^{-b} = \mu \, \sqrt{A} \, \sqrt{R+5} & \text{pour} \quad \text{E} \end{cases} \qquad (15)$$

En partant de l'hypothèse que $er_k$ est une variable gaussienne, on peut tirer de (15) l'expression du plus petit bit en remplaçant $\mu$ par la valeur qu'il doit avoir pour arriver au même résidu d'écho er. On arrive alors au Tableau suivant, lorsque B est supposé nul :

(Voir Tableau II page 8)

Tableau II

| Algorithmes | μ à er donné | Dernier bit nécessaire pour assurer la convergence : b |
|---|---|---|
| (E) | $\mu_E = \dfrac{2R}{NA(\ S)}$ | $2^{-b_E} = \dfrac{2\ R\ \ \sqrt{R+S}}{N\ \sqrt{A}\ \ S}$ |
| (SI) | $\mu_{SI} = \dfrac{2\ \sqrt{2}\ \ R\ e^{-S/2R}}{NA\ \sqrt{\pi}\ \ \sqrt{R}}$ | $2^{-b_{SI}} = \dfrac{2\ R\ \ e^{-S/2R}}{N\sqrt{A}\ \sqrt{\pi}\ \sqrt{R}}$ |
| (SI') | $\mu_{SI'} = \dfrac{2\ \sqrt{2}\ \ \ R}{NA\ \sqrt{e\pi}\ \ \sqrt{S}}$ | $2^{-b_{SI'}} = \dfrac{2\ R}{N\ \sqrt{A}\ \sqrt{e\pi}\ \ \sqrt{S}}$ |
| (SURAX) | $\mu_{SU} = \dfrac{\sqrt{2}\ R[1+e^{-S/2R}]}{N\ A\sqrt{\pi}\ \ \sqrt{R}}$ | $2^{-b_{SU}} = \dfrac{R[1+e^{-S/2R}]}{N\ \sqrt{A}\ \sqrt{\pi}\ \sqrt{R}}$ |
| (SIGNIF) | $\mu_{SIG} = \dfrac{2\ \sqrt{2}\ \ \ R}{NA\ \sqrt{\pi}\ \ \sqrt{R}}$ | $2^{-b_{SIG}} = \dfrac{\sqrt{2}\ \ \ R}{N\ \sqrt{A}\ \sqrt{\pi}\ \ \sqrt{R}}$ |

La comparaison entre SIGNIF et SURAX (pour lesquelles les derniers bits sont désignés $b_{SIG}$ et $b_{Su}$) à partir du Tableau II ci-dessus montre que :

$$2^{b_{SIG} - b_{SU}} = \frac{1}{\sqrt{2}}\left[1 + \exp\left(-\frac{S}{2R}\right)\right]$$

Cette quantité est comprise entre — 0,5 bit et 0,5 bit mais, pour une bonne annulation d'écho, qui implique R << S, l'algorithme SIGNIF apporte un gain de 0,5 bit sur SURAX. Un calcul faisant intervenir le bruit montre qu'il serait équivalent dans le cas d'un bruit forcé de niveau B = S.

La comparaison entre les résultats du Tableau II pour les algorithmes SI et SIGNIF montre que :

$$2^{b_{SIG} - b_{SI}} = \sqrt{2} \cdot \exp\left(-\frac{S}{2R}\right)$$

$b_{SIG}$ est donc inférieur à $b_{SI}$ dans tous les cas utiles, et la différence est grande lorsque le système fonctionne bien, c'est-à-dire que R/S est petit. Ce point est très important puisque l'un des handicaps de (SI) par rapport à (E) est la grande précision nécessaire à la représentation binaire de ses coefficients. On voit que (SIGNIF) élimine les inconvénients de (SI).

Enfin, si on compare les longueurs binaires pour E et SIGNIF, on trouve :

$$2^{b_{SIG} - b_E} = [2\pi(R/S)(R/S + 1)]^{1/2} \tag{16}$$

$$\text{Si}\ \frac{S}{B} < 2\pi - 1 . \tag{17}$$

la longueur binaire pour SIGNIF est supérieure à celle de E pour toutes les valeurs R/S. Mais, en pratique, l'inéquation (17) n'est pas vérifiée puisque le bruit dans E est le bruit de ligne, qui est faible. On peut en conclure que $b_E > b_{SIG}$ dès que :

$$\frac{R}{S} < \triangleq -\frac{1}{2} + \frac{1}{2}\sqrt{1+\frac{2}{\pi}} \simeq -8,5\ \text{dB} \tag{18}$$

Dans les cas pratiques, le niveau de résidu que l'on cherche à atteindre est toujours inférieur au niveau défini par (18) si bien que l'algorithme SIGNIF nécessite moins de bits que l'algorithme E lui-même. Un calcul plus complet, faisant intervenir le bruit, montre que la différence

8

EP 0 127 544 B1

$$b_E - b_{SIG} \simeq \frac{1}{2} \log_2 \frac{S}{R} - \frac{1}{2} \log_2 4\pi, \qquad (19)$$

pour une qualité moyenne d'annulation d'écho, c'est-à-dire lorsque les deux algorithmes obtiennent :

$$R \simeq B$$

Pour une très bonne qualité, c'est-à-dire pour $R \ll B$, la différence vaut :

$$b_E - b_{SIG} \simeq \frac{1}{2} \log_2 \frac{S}{B} - \frac{1}{2} \log_2 2\pi, \qquad (20)$$

A partir de là, on peut déterminer le gain en bits de SIGNIF par rapport à E pour une valeur donnée de S/B :

$S/B = S/R = 20$ dB, $b_E - b_{SI} = 1,5$ bit
$S/B = 30$ dB, $S/R = 40$ dB, $b_E - b_{SI} = 3,5$ bits.

La Figure 5 représente le gain en longueur binaire apportée par l'algorithme SIGNIF par rapport aux algorithmes SI, SURAX, SI' et E. Ce gain est représenté en fonction de R/S (la qualité d'annulation d'écho) pour un rapport signal à bruit de ligne S/B égal à 20 db.

Etant donné que, comme l'algorithme classique du signe, l'algorithme SIGNIF utilise signe $(e_k)$ et non $e_k$ lors de l'adaptation des coefficients, cette réduction supplémentaire d'une moyenne de 2 bits par rapport à l'algorithme E, place l'algorithme SIGNIF en meilleure position parmi les algorithmes d'annulation adaptative d'écho.

Les opérations de calcul (filtrage par convolution $\overline{C_k}^t \cdot a_k$ et adaptation) sont également plus simples dans le cas de SIGNIF que dans celui de E. La complexité du calcul peut être caractérisée par le nombre de multiplications et le nombre d'additions élémentaires nécessaires : ces nombres dépendent à la fois de l'algorithme et de la longueur des mots binaires utilisés.

Une évaluation fait apparaître que, pour chaque composante de $\overrightarrow{C_k}$

on gagne deux multiplications et un grand nombre d'additions en substituant SIGNIF à SI,

on gagne à la fois un grand nombre de multiplications et d'additions en substituant SIGNIF à E.

La seule sujétion dans le cas de SIGNIF est la nécessité d'une détection à seuil à chaque étape pour déterminer laquelle des données $d_k^r$ et $d_k^i$ est nulle. Mais cette opération doit de toutes façons être faite par le récepteur dans un dispositif de décision si elle ne l'est pas dans l'annuleur d'écho. Elle ne représente donc pas une complication.

Dans le cas représentatif d'un filtre à N = 16 prises, d'un signal de puissance S = $10^{-1}$, d'un rapport R/S = — 18,5 dB, on obtient une économie de 36 % sur la complexité de calcul en utilisant SIGNIF au lieu de E. De plus, ce pourcentage ne diminue guère lorsque l'amplitude $\sqrt{S}$ du signal décroît. En effet, pour de faibles valeurs de S, le convertisseur analogique/numérique d'entrée doit être plus précis. par exemple, si le signal d'entrée décroît jusqu'à S = — 42 dBm, le convertisseur nécessite 12 bits et on retrouve un gain de 35 %.

On décrira maintenant, en faisant référence aux figures 6, 7 (où les indices ne sont pas marqués pour plus de clarté) et 8, la façon dont s'effectue le choix de la rotation à imposer et une constitution d'annuleur d'écho qui comporte des moyens capables d'utiliser le principe de projection en mettant en œuvre un algorithme de poursuite de phase qui fonctionne conjointement avec GEN. Les éléments de la Figure 6 correspondant à ceux de la Figure 1 sont désignés par le même numéro de référence.

Avant de décrire l'annuleur d'écho, on définira la fonction qu'il doit remplir et son mode d'action. La correction de phase $\varphi_k$ qui doit être effectuée peut être décomposée en 2 parties :

$$\varphi_k = \theta_k + \xi_k \qquad (20bis)$$

Dans cette formule, $\theta_k$ est une grandeur analogique, correspondant au décalage (gigue, dérive ..) de phase introduit par la ligne de transmission ; l'angle $\theta_k$ est donc lentement variable par rapport à $\zeta_k$, comme on le verra plus loin.

Si $d_k$ est la donnée émise ou donnée lointaine, le décalage de phase dû à la ligne se traduit par exemple par le fait que la donnée reçue $d'_k$ (contenue dans le signal reçu $y_k$) est de la forme

$$d'_k = d_k \exp(- i\theta'_k)$$

Il faut faire une estimation $\theta_k$ de $\theta_k'$. C'est le rôle de l'algorithme d'adaptation de phase qui réalisera ainsi la synchronisation des porteuses.

Dans cette même formule 20 bis, $\zeta_k$ est une valeur discrète aléatoire, caractéristique de la donnée $d_k$ émise ; elle peut être définie par

$$\zeta_k = (\overrightarrow{Od_k}, \text{ axe le plus proche de } \overrightarrow{Od_k})$$

9

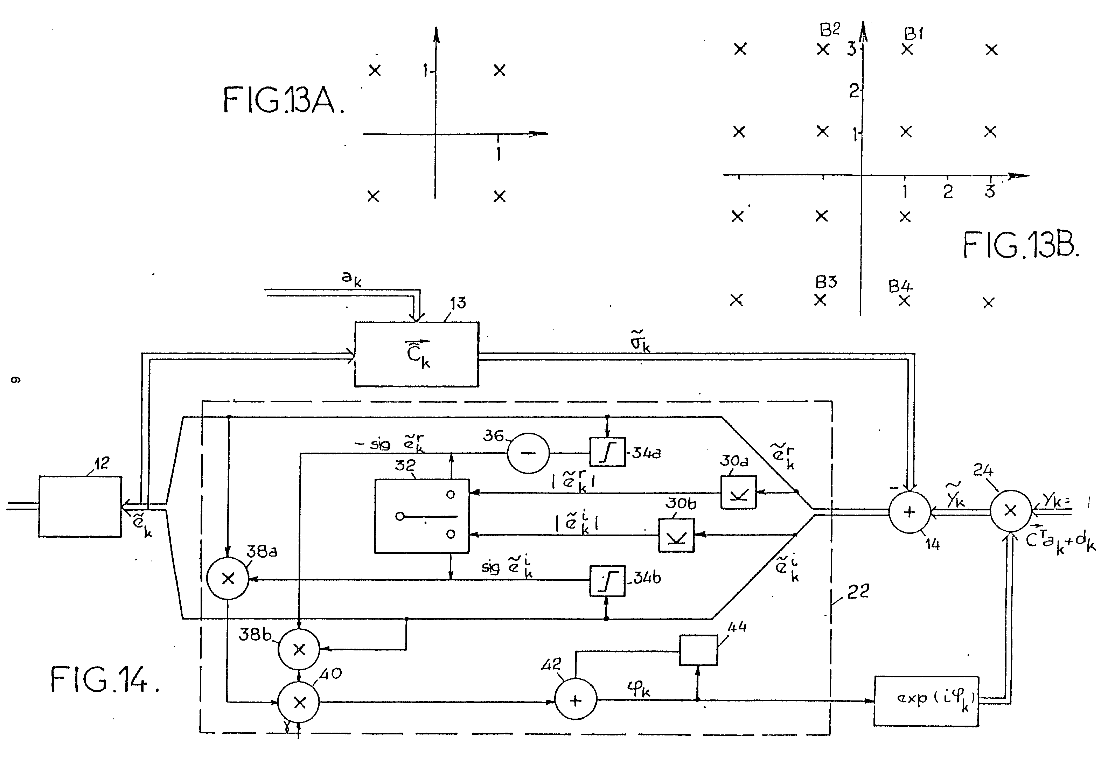

On aura donc $|\delta_k| \leqslant \pi/4$ ; lorsque les deux composantes de $d_k$ ont des modules égaux, on peut choisir arbitrairement $\zeta_k = \pi/4$ plutôt que $-\pi/4$ : ce sera le cas de points sur les diagonales du diagramme (ensemble des points pour le diagramme à 4 points de la figure 13A, huit des seize points sur la figure 13B).

Le système aura donc aussi à évaluer $\zeta_k$.

Pour cela, on va évaluer $\theta_k$ (en supposant que $\zeta_k$ ait été trouvé, c'est-à-dire que le régime de fonctionnement est établi). Le signal « propre » $e_k$ a subi une rotation de phase $\varphi_k$ et est devenu $\tilde{e}_k$ :

$$\tilde{e}_k = e_k \exp(i\varphi_k)$$

Ce signal $\tilde{e}_k$ fournit la donnée modifiée $\tilde{d}_k$ :

$$\tilde{d}_k = d_k \exp[i(\varphi_k - \theta'_k)]$$
$$= d'_k \exp(i\varphi_k)$$

La donnée $\tilde{d}_k$ sera située au voisinage de l'un des axes si l'angle $\varphi_k$ a été correctement choisi. Si la valeur de $\varphi_k$ n'est pas correcte (c'est-à-dire si $\theta$ n'est pas un estimateur correct de $\theta'$), même si l'annuleur d'écho fonctionne correctement, $d_k$ ne sera pas sur un axe.

Le signal $\tilde{e}_k$ est alors significatif du résidu de déphasage ($\varphi_k - \xi_k - \theta'_k$), par l'angle :

$$\Psi_k = (\overrightarrow{O\tilde{e}_k}, \text{ axe le plus proche de } \overrightarrow{O\tilde{e}_k})$$

Il est donc possible de poursuivre le décalage $\theta_k$ en mettant en œuvre un algorithme adaptatif fonctionnant comme une boucle à verrouillage de phase numérique du premier ordre, chargée d'atteindre automatiquement la bonne valeur de $\theta_k$ à l'aide du signal d'erreur $\psi_k$ (montré en figure 7) par la formule de récurrence

$$\theta_{k+1} = \theta_k + \gamma f_1(\psi_k) \tag{21}$$

où $\gamma$ est un paramètre d'adaptation, positif, et $f_1$ une fonction convenablement choisie.

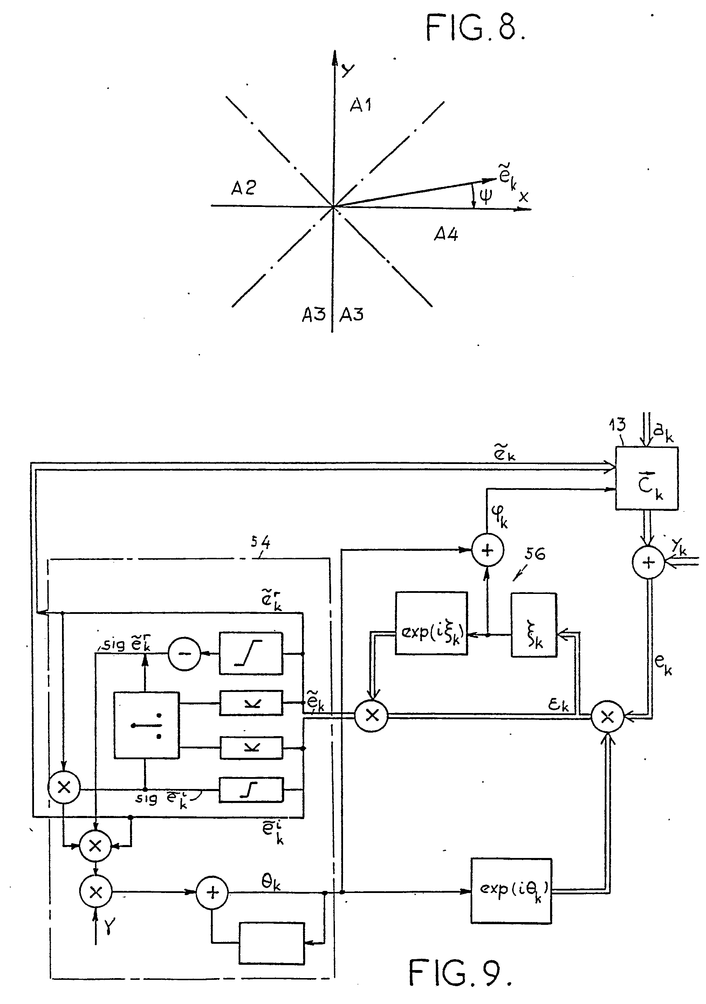

L'algorithme d'adaptation de phase (21) peut être écrit de façon plus précise en considérant les quatre régions A1-A4 délimitées par les deux bissectrices (Fig. 8). Lorsque par exemple $\tilde{e}_k$ se trouve dans la région A4, l'axe le plus proche de l'axe $\overrightarrow{O\tilde{e}_k}$ est Ox si bien que la donnée tournée $\tilde{d}_k$ doit se trouver sur l'axe Ox.

L'angle $\Psi$ est alors tel que

$$\text{tg } \psi_k = -\tilde{e}^i_k / \tilde{e}^r_k \quad \text{pour} \quad \tilde{e}_k \in A4 \tag{22}$$

et la donnée modifiée $d_k$ doit être envoyée vers $O_x$ par rotation. Dans une telle rotation, le module de $\tilde{d}_k$ (ou $\tilde{e}_k$) reste constant et l'optimum est atteint lorsque la composante imaginaire $\tilde{d}_k^i$ (ou $\tilde{e}_k^i$) est rendue maximale. Par conséquent, lorsque $\tilde{e}_k$ est dans la région A4, la variable $\theta_k$ peut être ajustée par l'algorithme du gradient. Avec les notations des figures 7 et 8, l'algorithme peut finalement s'écrire sous la forme générale :

$$\theta_{k+1} = \theta_k + \gamma \begin{cases} \tilde{e}^r_k \text{ signe } (\tilde{e}^i_k), \tilde{e}_k \in A1UA3 \\ -\tilde{e}^i_k \text{ signe } (\tilde{e}^r_k), \tilde{e}_k \in A2UA4 \end{cases} \tag{23}$$

Pour de faibles valeurs de l'angle d'erreur $\psi_k$, la première des formules (23) peut s'écrire, en utilisant la valeur fournie par (22) :

$$\varphi_{k+1} = \varphi_k + \gamma \Psi_k |\tilde{e}^i_k|, \tilde{e}_k \in A1UA3 \tag{24}$$

et puisque $e_k$ et $d_k$ sont peu différents, en remplaçant $(d_k)$ par une valeur moyenne, l'algorithme (24) peut être approximé par :

$$\varphi_{k+1} = \varphi_k + \gamma \sqrt{S} \psi_k \tag{25}$$

Sous cette dernière forme, on voit qu'il est avantageux de donner à $\gamma$ une valeur inversement propotionnelle à $\sqrt{S}$. Lorsqu'on peut évaluer S, le paramètre peut être ajusté initialement. Dans le cas contraire, on pourra lui donner une valeur forte et prévoir un algorithme d'adaptation diminuant progressivement jusqu'à l'optimum.

En revenant à l'algorithme (23), on voit que ce dernier met en évidence la façon dont on tend à maximiser (ou à minimiser) la composante imaginaire $\tilde{e}_k^i$ lorsque $\tilde{e}_k$ est situé dans la région A1 (A3) ; pour A2 et A4, le mécanisme est similaire.

Il faut relever au passage que, même en l'absence de perturbations dues à la ligne, le récepteur doit synchroniser les porteuses, c'est-à-dire la phase du démodulateur avec celle du signal utile : cette tâche est ici effectuée automatiquement par l'algorithme $\theta_k$, qui se substitue donc à un élément du récepteur.

En d'autres termes, la fonction imposée à l'annuleur d'écho, qui consiste à modifier les données $\hat{d}_k$ pour les tourner vers les axes, ne représente pas une tâche supplémentaire par rapport aux algorithmes usuels d'annulation d'écho.

Une fois l'adaptation de phase $\theta_k$ effectuée, le système est stabilisé et l'on obtient le signal $\varepsilon_k$ (Figs 6 et 7)

$$\varepsilon_k = e_k \cdot \exp(i\theta_k)$$

ou encore

$$\varepsilon_k = er_k \cdot \exp(i\theta_k) + S_k$$

avec

$$S_k = d_k \exp[i(\theta_k - \theta_k')]$$

Le résidu d'écho étant faible et le décalage $\theta_k'$ étant bien compensé par $\theta_k$, le signal $\varepsilon_k$ permet de détecter la donnée émise $d_k$, donc d'évaluer l'angle $\xi_k$.

La Figure 6 (qui utilise les mêmes notations que la Figure 1) montre de façon très simplifiée la constitution générale que peut avoir un annuleur d'écho à adaptation de la phase $\theta_k$ fonctionnant sur ce principe. Il comporte, en plus des composants qui apparaissent sur la Figure 1, une boucle 44 d'adaptation de phase, et une boucle 56 d'élaboration de $\xi_k$.

La boucle 54 d'adaptation de la phase $\theta_k$ peut avoir, dans tous les cas, la constitution générale montrée en Figure 9, ayant la même constitution que la boucle 22 de la Figure 14 et qu'il n'est donc pas nécessaire de décrire ici. La boucle 55 peut avoir :

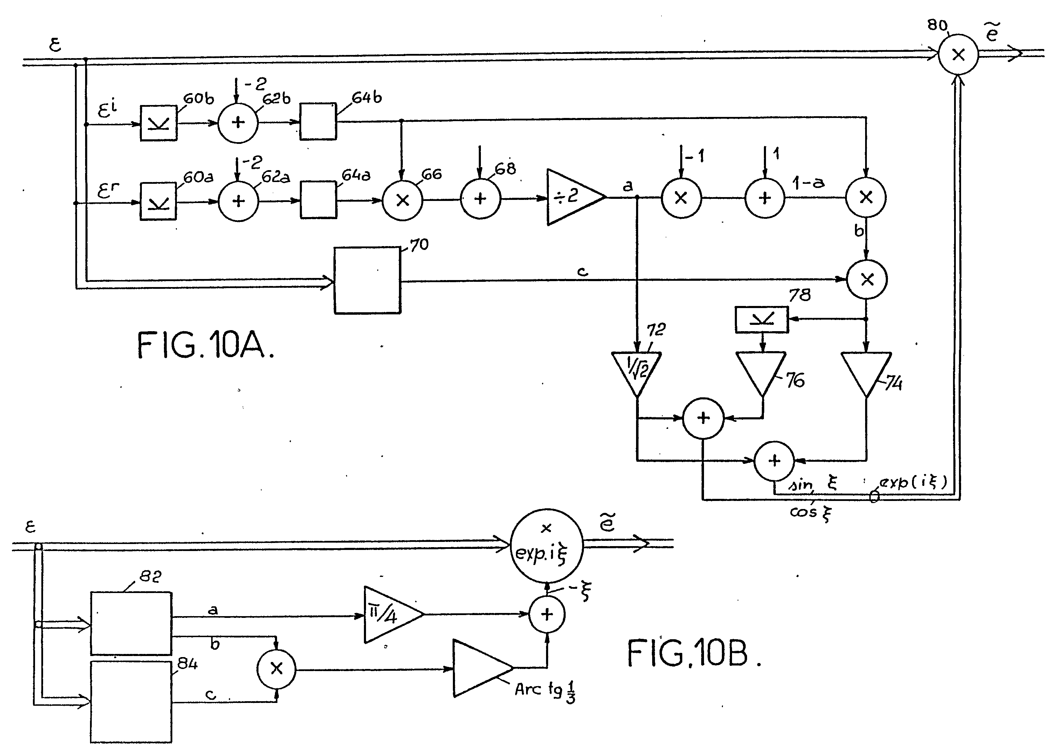

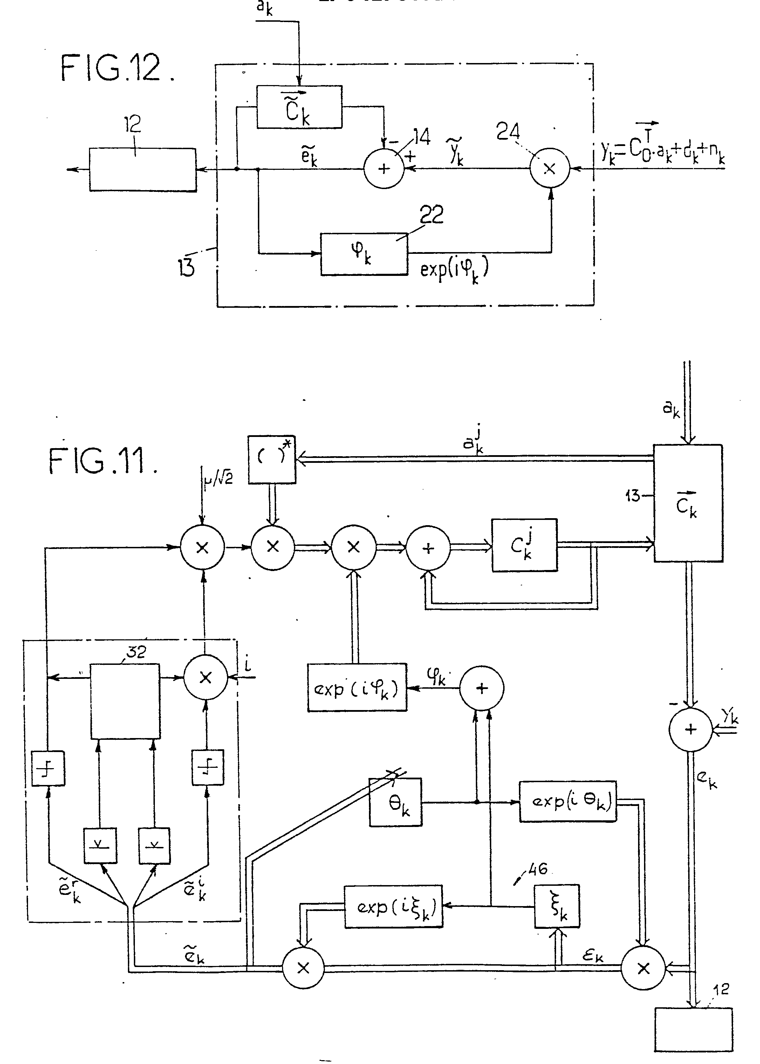

la constitution donnée en Figure 10A ou 10B dans le cas de diagrammes à 16 points (Figure 13B),

la constitution montrée en Figure 11 dans le cas d'application de l'algorithme SIGNIF, par la formule (26) qui sera mentionnée plus loin.

La Figure 10A montre les composants nécessaires pour déterminer $\xi$ par application de la formule

$$\xi = a\frac{\pi}{4} + cb \operatorname{Arc} \operatorname{tg} \frac{1}{3}$$

correspondant au cas où sont pris en compte les 16 points du diagramme de la Figure 13B (utilisé pour la transmission à 9600 bauds) avec :

$$a = 0, \ b = \pm 1$$

ou

$$a = 1, \ b = 0$$

et

$$c = \pm 1,$$

L'ensemble des cas ainsi définis correspond à tous les points du diagramme. Par exemple, pour les points sur les diagonales, correspond à :

$$[|d^i| > 2 \text{ et } |d^r| > 2]$$

ou

$$[|d^i| < 2 \text{ et } |d^r| < 2]$$

on a :

$$\xi_k = \pi/4.$$

Pour les points B1, B2, B3, B4, on a au contraire

$$[|d^i| > 2 \text{ et } |d^r| < 2]$$

et, dans ce cas :

$$\xi_k = \operatorname{sig}(d^i) \cdot \operatorname{sig}(d^r) \operatorname{Arc} \operatorname{tg} 1/3$$

On trouve un résultat similaire pour les quatre points restants.

Le circuit de la Figure 10A permet de réaliser l'adaptation pour tous les points, donc d'avoir une convergence rapide. Il comporte deux voies correspondant l'une à $\varepsilon_r$, l'autre à $\varepsilon_i$ et comportant chacune un circuit 60a ou 60b de détermination de valeur absolue, un sommateur 62a ou 62b ajoutant — 2 à la sortie et un circuit 64a ou 64b de détermination du signe. Le produit des signes est formé en 66, pour permettre l'élaboration de a et de 1-a. Parallèlement, c est élaboré par un détecteur de seuils 70 travaillant sur $\varepsilon^r$ et $\varepsilon^i$.

Le calcul dans le cas de points sur les diagonales est alors effectué par un seul amplificateur 72 de gain

$$\frac{1}{\sqrt{2}} = \cos \frac{\pi}{4} = \sin \frac{\pi}{4}$$

Le calcul dans le cas des autres points fait intervenir d'une part un amplificateur 74 de gain $1/\sqrt{10}$, c'est-à-dire sin (Arc tg 1/3), d'autre part, un détecteur de valeur absolue 78 et un amplificateur de gain $3/\sqrt{10}$, c'est-à-dire cos (Arc tg 1/3). Des additionneurs permettent d'élaborer $\sin\xi$ et $\cos\xi$ qui sont appliqués au multiplieur complexe 80 qui fournit $\bar{e} = \varepsilon \cdot \exp(i\xi)$.

La Figure 10B donne un diagramme plus général : les blocs 82 et 84 sont respectivement un circuit d'élaboration de a et b et un circuit formant le produit des signes de $\varepsilon^r$ et $\varepsilon^i$, c'est-à-dire c.

Une fois les données déphasées vers les axes, en $\bar{e}_k$, l'algorithme GEN ou tout autre algorithme utilisant le même principe de projection peut être mis en œuvre de la façon suivante :

La composante de $\bar{e}_k$ orthogonale à l'axe le plus proche est significative de l'écho résiduel.

Seule cette composante va être utilisée si, par exemple, on applique l'algorithme SIGNIF :

$$\vec{\bar{C}}_{k+1} = \vec{\bar{C}}_k + (\mu/\sqrt{2})\,\vec{\bar{a}}_k^* \begin{cases} i\,\mathrm{sgn}\,(\bar{e}_k^i) & \text{si} \quad |e_k^i| < |\bar{e}_k^r| \\ \mathrm{sgn}\,(\bar{e}_k^r) & \text{si} \quad |e_k^i| > |\bar{e}_k^r| \end{cases}$$

où

$$\vec{\bar{C}}_k = \vec{C}_k \exp(i\varphi_k),$$

On obtient le vecteur $\overline{C}_k$ qui poursuit le chemin d'écho $\overline{C}_o$ en implémentant l'algorithme :

$$\vec{C}_{k+1} = \vec{C}_k + e^{-i\varphi_k}(\mu/\sqrt{2})\,\vec{a}_k^* \begin{cases} i\,\mathrm{sgn}\,\tilde{e}_k^i & \text{si} \quad |\tilde{e}_k^i| < |\tilde{e}_k^r| \\ \mathrm{sgn}\,\tilde{e}_k^r & \text{si} \quad |e_k^i| > |\tilde{e}_k^r| \end{cases} \tag{26}$$

La Figure 11 donne un schéma de circuit qui met en œuvre l'algorithme (26) et qu'il n'est pas nécessaire de décrire en détail, car ses composants sont ou bien classiques, ou bien décrits par ailleurs dans la présente demande.

On décrira maintenant, en faisant référence à la Figure 12, le cas particulier simple où $\xi_k$ est constant et égal à $\pi/4$. C'est par exemple le cas d'un diagramme à quatre points (Figure 13A) et celui d'un diagramme plus général (tel que celui de la Figure 13B si on admet de faire l'adaptation des cœfficients de l'annuleur d'écho uniquement à l'aide des points situés sur les diagonales). Cette solution a l'intérêt d'être simple, mais elle ralentit la convergence.

Dans ce cas, il n'est pas nécessaire d'éclater $\varphi_k$ en deux parties ; c'est l'algorithme d'adaptation (21) qui permet d'évaluer directement cet angle $\varphi_k$.

L'algorithme poursuit alors l'angle $\theta'_k + \pi/4$ ; il effectue à la fois les deux tâches : poursuite de décalage de phase du canal et transfert des données sur les axes. Le système peut être simplifié selon le schéma unifilaire de la Figure 12.

Dans ce système, correspondant à $\xi = + \mu/4$, l'annulation d'écho est réalisée après l'ajustement de phase. Le signal observé $y_k$ est transformé par la rotation $\varphi_k$ en un signal

$$\tilde{y}_k = y_k\,e^{i\varphi_k}.$$

Le signal « propre » tourné, obtenu après annulation d'écho, est calculé sous une autre manière par la formule

$$\tilde{e}_k = \tilde{y}_k - \vec{\bar{C}}_k\,T\vec{\bar{a}}_k$$

où le vecteur d'écho estimé $\bar{C}_k$ poursuit le vecteur d'écho réel tourné $\overline{C}_o\,e^{i(\theta'k + \pi/4)}$ et non le chemin d'écho $C_o$ lui-même. Le déphasage du canal de transmission de la donnée lointaine, augmenté de $\pi/4$, est pris en compte dans l'annuleur d'écho.

L'algorithme adaptatif de correction de phase est mis en œuvre par une boucle qui comprend un élément 22 de détermination de $\varphi_k$ à partir des deux composantes du signal complexe $\bar{e}_k$ qu'il reçoit et un multiplieur complexe 24. Ce multiplieur reçoit

le signal $y_k$ provenant de la ligne (pouvant également comporter un bruit $n_k$) et
le signal $\exp(i\varphi_k)$ fourni par l'élément 22.

Le signal $\bar{y}_k$ de sortie du multiplieur 24 est ensuite traité dans l'annuleur d'écho, de constitution générale classique, si ce n'est qu'il met en œuvre l'algorithme SIGNIF de SIGNID.

L'élément 22 de détermination de $\varphi_k$ peut par exemple avoir la constitution montrée en Figure 14, où les éléments correspondant à ceux de la Figure 12 portent le même numéro de référence.

L'élément 22 comporte deux voies traitant respectivement la composante réelle $e_k^r$ et la composante imaginaire $\bar{e}_k^i$ de $\bar{e}_k$. Chaque voie comporte un élément 30a ou 30b fournissant la valeur absolue à un circuit de comparaison et de commutation 32. Le circuit 32 détermine quelle est la plus grande des deux valeurs d'entrée et valide en conséquence l'une ou l'autre de deux voies d'adaptation. Chaque voie d'adaptation comporte un circuit à seuil 34a ou 34b (suivi d'un inverseur 36 sur la voie correspondant à $\bar{e}_k^r$) et un multiplieur 38a ou 38b. Ces multiplieurs sont montés pour fournir respectivement

$$\bar{e}_k^r \text{ affecté du signe de } \bar{e}_k^i$$
$$\bar{e}_k^i \text{ affecté du signe de } \bar{e}_k^r$$

Celui des deux résultats qui est retenu du fait de la validation par le circuit de commutation 32 est multiplié par le paramètre $\gamma$ dans un multiplieur programmable 40. Le produit, par exemple $\bar{e}^r$ (signe de $\bar{e}_k^i$) est ajouté par un additionneur 42 à la valeur précédente de $\varphi_k$, conservée par une mémoire 44. Un circuit 46 classique permet de générer $\exp(i\varphi_k)$ à partir des valeurs successives de $\varphi_k$ pour l'appliquer au multiplieur 22.

Le processus d'adaptation de système est similaire à celui des annuleurs classiques, avec une éventuelle phase d'apprentissage. Il est par ailleurs possible de mettre en œuvre initialement l'algorithme SI, à convergence plus rapide, lorsque les données n'ont pas encore atteint les axes, et de parachever l'annulation d'écho à l'aide de SIGNIF.

En résumé, le principe de projection permet de façon simple, de réduire considérablement le résidu d'écho. L'efficacité de ce principe repose sur la particularité que le signal de données complexe a une de ses composantes, réelles ou imaginaires, nulle de sorte que, sur l'axe correspondant, le signal ne perturbe pas l'adaptation de l'annuleur d'écho. Et les éléments requis pour réaliser cette condition ne se traduisent pas par une complexité accrue, du fait qu'ils se substituent à des composants de réception nécessaires.

De façon générale, le principe de projection garantit la convergence dans le cas où l'on prend le signe de l'erreur.

Dans le cas d'un diagramme 16 points, la prise en compte de tous les points garantit une convergence rapide, mais n'est pas indispensable.

SIGNIF avec une complexité moindre donne toujours des résultats satisfaisants.


## Revendications

1. Annuleur d'écho adaptatif pour système de transmission bidirectionnelle simultanée par modulation MAQ ou de phase entre une station locale émettant un signal de données locales $a_k$ et une station éloignée émettant des données lointaines $d_k$ sur un même support de transmission (10), comprenant un filtre numérique adaptatif (13) destiné à fournir l'estimation $\sigma_k$ de l'écho effectif, dont l'algorithme d'adaptation du vecteur C des cœfficients est de la forme :

$$\vec{C}_{k+1} = \vec{C}_k + \mu a_k^* \cdot f(e_k)$$

où $\mu$ est un pas d'incrémentation déterminé, $a_k^*$ est la valeur conjuguée du signal de données locales, $e_k$ est un signal propre généré à partir du signal de données lointaines et débarrrassé d'écho, et f est une fonction prédéterminée, et des moyens (14) pour calculer le signal $e_k$ en soustrayant le signal de sortie $\sigma_k$ du filtre, du signal $y_k$ arrivant par le support de transmission, caractérisé en ce que la fonction d'adaptation des cœfficients du filtre (13) extrait du signal $e_k$, débarrassé d'écho à la sortie du soustracteur (14), sa seule composante vectorielle significative, orthogonale aux données lointaines $d_k$.

2. Annuleur d'écho adaptatif pour système de transmission bidirectionnelle simultanée par modulation MAQ ou de phase entre une station locale émettant un signal de données locales $a_k$ et une station éloignée émettant des données lointaines $d_k$ sur un même support de transmission (10), comprenant :
un filtre numérique adaptatif (13) destiné à fournir en sortie l'estimation $\sigma_k$ de l'écho effectif, dont l'algorithme d'adaptation du vecteur C des cœfficients est de la forme :

$$\vec{C}_{k+1} = \vec{C}_k + \mu a_k^* \cdot f(\bar{e}_k)$$

où $\mu$ est un pas d'incrémentation déterminée, $a_k^*$ est la valeur conjuguée du signal de données locales, $\bar{e}_k$

EP 0 127 544 B1

est un signal propre généré à partir du signal de données lointaines et débarrassé d'écho et f est une fonction prédéterminée dudit signal propre $\tilde{e}_k$,

des moyens soustracteurs (14) pour calculer le signal $\tilde{e}_k$, en soustrayant le signal de sortie $\sigma_k$ du filtre du signal de données lointaines arrivant par le support de transmission, et

un circuit correcteur de phase adaptatif (22, 24) interposé en série entre le support de transmission (10) et les moyens soustracteurs (14) déphasant toutes les données lointaines complexes d'un même angle, caractérisé en ce que le circuit correcteur de phase adaptatif est constitué de façon à appliquer aux moyens soustracteurs (14) un signal $\bar{y}_k$ dans lequel toutes celles des données lointaines qui ont une condition prédéterminée parmi la pluralité finie de conditions autorisées par la modulation MAQ ou de phase sont sensiblement réelles ou sensiblement imaginaires après ledit déphasage et de façon que le signal propre $\tilde{e}_k$ présente le même déphasage.

3. Annuleur d'écho suivant la revendication 1, caractérisé en ce que la fonction f utilise le signe du composant vectoriel de $e_k$ qui est orthogonal au signal de données lointaines.

4. Annuleur d'écho suivant la revendication 2, caractérisé en ce que, pour les données ramenées sur les axes, la fonction f est le signe de $\tilde{e}_k$.

5. Annuleur d'écho suivant la revendication 2, caractérisé en ce que le circuit correcteur de phase comprend une boucle à verrouillage de phase numérique du premier ordre placée entre la sortie du soustracteur (14) et un multiplicateur (24) recevant les données provenant du support de transmission.

6. Annuleur d'écho suivant la revendication 5, caractérisé en ce que la boucle comprend un élément (22) de détermination de la phase à partir des composantes réelle et imaginaire du signal complexe de sortie du soustracteur (14), ledit élément fonctionnant suivant l'algorithme :

$$\phi_{k+1} = \phi_k + \gamma f_1(\psi_k)$$

où $\phi_k$ est ledit même angle de déphasage, $\gamma$ est un paramètre d'adaptation positif, $f_1$ est une fonction prédéterminée et $\psi_k$ est l'angle formé par $\tilde{e}_k$ et celui des axes réel et imaginaire pour lequel l'angle nécessaire pour rendre réelle ou imaginaire certaines au moins des données lointaines est le plus faible.

7. Annuleur suivant la revendication 6, caractérisé en ce que $f_1$ est proportionnel à $\psi_k$.

8. Annuleur d'écho suivant la revendication 7, caractérisé en ce que $\gamma$ a une valeur inversement proportionnelle à $\sqrt{S}$, S étant la puissance du signal de données lointaines.


**Claims**

1. Adaptive echo canceller for a simultaneous bidirectional transmission system using QAM or phase modulation, between a local station sending a local data signal $a_k$ and a remote station sending far end data $d_k$ on a same transmission medium (10), comprising an adaptive digital filter (13) for providing an estimation $\sigma_k$ of the actual echo, having a vector of coefficients C whose adaptation algorithm is of the type :

$$\vec{C}_{k+1} = \vec{C}_k + \mu a_k^* \cdot f(e_k)$$

where $\mu$ is a predetermined incrementation step, $a_k^*$ is the conjugated value of the local data signal, $e_k$ is a clean signal derived from the far end data signal and free of echo, and f is a predetermined function, and means (14) for computing signal $e_k$ by subtracting the output signal $\sigma_k$ of the filter from the signal $y_k$ arriving over the transmission medium, characterized in that the function adapting the coefficients of the filter (13) is such as to extract, from the echo free signal $e_k$, available at the output of the subtractor (14), the significant vector component thereof which is orthogonal to the far end data $d_k$.

2. Adaptive echo canceller for a simultaneous bidirectional transmission system with QAM or phase modulation, between a local station sending a local data signal $a_k$ and a remote station sending far end data $d_k$ on a same transmission medium (10), comprising :

an adaptive digital filter (13) for delivering an estimated value $\sigma_k$ of the actual echo on its output, the adaptation algorithm of the vector C of the coefficients of the digital filter being of the type :

$$\vec{C}_{k+1} = \vec{C}_k + \mu a_k^* \cdot f(\tilde{e}_k)$$

wherein $\mu$ is a predetermined incrementation step, $a_k^*$ is a conjugated value of the local data signal, $\tilde{e}_k$ is a clean signal derived from the far end data signal and free of echo, and f is a predetermined function of said clean signal $e_k$,

subtractor means (14) for computing signal $\tilde{e}_k$ by subtracting the output signal $\sigma_k$ of the filter from the far end data signal arriving over the transmission medium, and

an adaptive phase correction circuit (22, 24) located in series relation between the transmission medium (10) and the subtractor means (14) for phase shifting all the complex far end data by a same angle, characterized in that the adaptive phase correction circuit is arranged for delivering to the subtractor means (14) a signal $\bar{y}_k$ in which all those far end data which have a predetermined condition

14

among the finite plurality of conditions authorized by the QAM or phase modulation are substantially real or substantially imaginary after said phase shift and for giving the same phase shift to the clean signal $\tilde{e}_k$.

3. Echo canceller according to claim 1, characterized in that the function f uses the sign of that vectorial component of $e_k$ which is orthogonal to the far end data signal.

4. Echo canceller according to claim 2, characterized in that, for the data brought back along the axes, the function f is the sign of $\tilde{e}_k$.

5. Echo canceller according to claim 2, characterized in that the phase correction circuit includes a first oder digital phase lock loop, placed between the output of the subtractor (14) and a multiplier (24) which receives the data coming from the transmission medium.

6. Echo canceller according to claim 5, characterized in that the loop includes an element (22) for determining the phase from the real and imaginary components of the complex signal available at the output of the subtractor, said element operating according to the algorithm :

$$\phi_{k+1} = \phi_k + \gamma f_1(\psi_k)$$

where $\phi_k$ is said same angle of phase shift, $\gamma$ is a positive adaptation parameter, $f_1$ is a predetermined function and $\psi_k$ is the angle formed by $\tilde{e}_k$ and that of the real and imaginary axes for which the angle necessary for rendering some at least of the far end data real or imaginary is smallest.

7. Echo canceller according to claim 6, characterized in that $f_1$ is proportional to $\psi_k$.

8. Echo canceller according to claim 7, characterized in that $\gamma$ has a value inversely proportional to $\sqrt{S}$, S being the power of the far end data signal.


## Patentansprüche

1. Echokompensator, der an ein System zur bidirektionellen simultanen Übertragung durch QAM- oder Phasenmodulation zwischen einer lokalen Station, die ein Signal von lokalen Daten $a_k$ aussendet, und einer entfernten Station, die entfernte Daten $d_k$ aussendet, über einen selben Übertragunsträger (10), angepaßt ist, der ein adaptives digitales Filter (13), das dazu bestimmt ist, die Abschätzung $\sigma_k$ des tatsächlichen Echos zu liefern, dessen Adaptionsalgorithmus des Koeffizientenvektors C von der Form ist :

$$\vec{C}_{k+1} = \vec{C}_k + \mu a_k^* \cdot f(e_k)$$

worin $\mu$ ein bestimmter Inkremetationsschritt ist, $a_k^*$ der konjugierte Wert des Signals der lokalen Daten ist, $e_k$ ein passendes Signal, das ausgehend von den entfernten Daten erzeugt und echofrei ist, und f eine vorbestimmte Funktion ist, und Mittel (14) aufweist zum Berechnen des Signals $e_k$, indem sie das Ausgangssignal $\sigma_k$ des Filters vom Signal $y_k$, das über den Übertragungsträger ankommt, abziehen, dadurch gekennzeichnet, daß die Adaptionsfunktion der Koeffizienten des Filters (13) vom Signal $e_k$, das echofrei am Ausgang des Subtrahierers (14) ist, die einzige bedeutsame vektorielle Komponente, die orthogonal zu den entfernten Daten $d_k$ ist, extrahiert.

2. Echokompensator, der an ein System zur bidirektionellen simultanen Übertragung durch QAM- oder Phasenmodulation zwischen einer lokalen Station, die ein Signal von lokalen Daten $a_k$ aussendet, und einer entfernten Station, die entfernte Daten $d_k$ aussendet, über einen selben Übertragungsträger (10) angepaßt ist, der aufweist :

einer adaptiven digitalen Filter (13), der dazu bestimmt ist, am Ausgang die Abschätzung $\sigma_k$ des tatsächlichen Echos zu liefern, dessen Adaptionsalgorithmus des Koeffizentenyektors C von der Form ist :

$$\vec{C}_{k+1} = \vec{C}_k + \mu a_k^* \cdot f(\tilde{e}_k)$$

worin $\mu$ ein vorbestimmter Inkrementationsschritt ist, $a_k^*$ der konjugierte Wert des Signales der lokalen Daten ist, $\tilde{e}_k$ ein passender Wert, der ausgehend vom Signal der entfernten Daten erzeugt und echofrei ist, und f ene vorbestimmte Fuktion dieses passenden Signals $\tilde{e}_k$,

Subtraktionsmittel (14) zum Berechnen des Signals $\tilde{e}_k$ durch Subtrahieren des Ausgangssignals $\sigma_k$ des Filters vom Signal der entfernten Daten, die über den Übertragungsträger ankommen, und

eine adaptive Phasenkorrekturschaltung (22, 14), die in Reihe zwischen den Übertragungsträger (10) une die Subtraktionsmittel (14) eingefügt ist und alle komplexen entfernten Daten um denselben Winkel verschiebt,

dadurch gekennzeichnet, daß die adaptive Phasenkorrekturschaltung so gebildet ist, daß sie an die Subtraktionsmittel (14) ein Signal $\tilde{y}_k$ anlegt, in welchem alle diejenigen der entfernten Daten, die eine vorbestimmte Kondition unter der endlichen Vielzahl der durch die QAM- oder Phasenmodulation zugelassenen Kombinationen aufweisen, nach der genannten Phasenverschiebung genau reell oder genau imaginär sind und so, daß das passende Signal $\tilde{e}_k$ dieselbe Phasenverschiebung darstellt.

15

3. Echokompensator nach Anspruch 1, dadurch gekennzeichnet, daß die Funktion f das Vorzeichen der vektoriellen Komponente von $e_k$ verwendet, die orthogonal zum Signal der entfernten Daten ist.

4. Echokompensator nach Anspruch 2, dadurch gekennzeichnet, daß für die auf die Achsen zurückgeführten Daten die Funktion f das Vorzeichen von $\tilde{e}_k$ ist.

5. Echokompensator nach Anspruch 2, dadurch gekennzeichnet, daß die Phasenkorrekturschaltung eine digitale Phasenverriegelungsschleife der ersten Ordnung aufweist, die zwischen dem Ausgang des Subtrahierers (14) und einem Multiplikator (24) angeordnet ist, die Daten empfängt, die von dem Übertragungsträger ausgehen.

6. Echokompensator nach Anspruch 5, dadurch gekennzeichnet, daß die Schleife ein Element (22) aufweist, das die Phase aus den reellen und imaginären Komponenten des komplexen Ausgangssignals des Subtrahierers (14) bestimmt, wobei dieses Element gemäß dem Algorithmus arbeitet :

$$\phi_{k+1} = \phi_k + \gamma f_1(\psi_k)$$

worin $\phi_k$ der erwähnte selbe Phasenverschiebungswinkel ist, $\gamma$ ein positiver Adaptionsparameter, $f_1$ eine vorbestimmte Funktion und $\psi_k$ der Winkel ist, der durch $\tilde{e}_k$ und diejenige der reellen und imaginären Achse gebildet ist, für die der notwendige Winkel, um sicher reelle oder imaginäre Komponenten mindestens von den entfernten Daten zu erhalten, der kleinste ist.

7. Echokompensator nach Anspruch 6, dadurch gekennzeichnet, daß $f_1$ proportional zu $\psi_k$ ist.

8. Echokompensator nach Anspruch 7, dadurch gekennzeichnet, daß $\gamma$ ein Wert ist, der umgekehrt proportional zu $\sqrt{S}$ ist, wobei S die Leistung des Signals der entfernten Daten ist.

Fig.1.

$e_k = y_k - \sigma_k$

$y_k = d_k + n_k + \sigma'_k$

Fig.2.

Fig.3.

Fig.4.

Fig.5.

## FIG.6.

## FIG.7.

2

# FIG.8.

# FIG.9.

FIG.10A.

FIG.10B.

FIG.12.

$$y_k = C_0^T \cdot a_k + d_k + n_k$$

FIG.11.

FIG.13A.

FIG.13B.

FIG.14.